# EUROPEAN PATENT APPLICATION

(11) **EP 3 367 318 A1**
(43) Date of publication of application: **29.08.2018**
(21) Application number: 16856803.8
(22) Date of filing: 26.09.2016
(51) Int. Cl.: G06Q 40/06

(54) **FINANCIAL TRANSACTION SYSTEM THAT LIMITS LOSS**

(30) Priority: 23.10.2015 CN 201510698517
(71) Applicant: Fund Roots Software Creative Limited, Kowloon (HK)
(72) Inventor: DOO, Hak Wai Barry, Yuen Long Hong Kong (CN)
(74) Representative: Walker, Ross Thomson
(86) International application number: PCT/CN2016/100157
(87) International publication number: WO 2017/067370

(57) **Abstract**

Disclosed in the present invention is a financial transaction system that limits loss, comprising a plurality of servers and clients, the server being provided therein with a financial transaction unit; the client being suitable for performing a real-time financial transaction by means of sharing the financial transaction unit; the financial transaction unit comprising a price limit locking module and a transaction forcing module, the price limit locking module being suitable for setting a target profit margin, a stop-loss margin and an investment amount of a financial transaction. When the price of the investment product reaches or is beyond the price P of the investment product corresponding to the prior one of the target profit margin and the stop-loss margin, the transaction forcing module being suitable for immediately performing transaction settlement on the investment product with the price P. The present invention requires that an investor must input an investment amount and a target profit margin and a stop-loss margin before confirming every transaction, and both parties cooperating in the transaction agree to perform settlement only with the stop-loss margin or target profit margin, such that the transaction amount of an investor is equivalent to the amount of loss, being capable of foreseeing a potential maximum loss.

## Description

### Technical Field

The present invention relates to the field of financial transaction, and specifically, relates to a financial transaction system that is capable of removing uncertainty of loss amount or investment amount, that is, a financial transaction system that limits loss.

### Background Art

Investing involves risk and reward. The commonly used method in the investment market may either satisfy return requirements of investors, or often bring them about risks not in line with expectations.

### Margin and leverage

Whether in spot and futures transactions or in options trading, unless an investor executes transaction on 100% of the contract value of the investment product, otherwise, transaction implemented in less than 100% of the contract value is called margin trading.

The working mechanism of a margin trading is illustrated by taking example of US oil futures:
Contract quantity: 1000 barrel;
Transaction price: USD 40 / barrel;
Contract value: USD 40,000;
Supposing that an investor A executes transaction on 100% of the contract value, that is, USD 40,000, it is called physical-goods transactions by insiders.

Supposing that an investor A executes transaction on 10% of the contract value, that is, USD 4,000, with a leverage ratio of 10 times, it is called margin trading or leverage trading by insiders.

Margin trading system will bring about Margin Call, even loss in excess of trading account assets of investor (Over-loss). The reason is that the margin trading system is not mandated to require an investor to preset a stop-loss margin, in case the reverse change margin of the price of the investment product runs beyond the security deposit, the investor is unavoidably asked to pay extra deposit. Such, customers have to bear large risk of uncertain loss, and thus are vulnerable to huge loss.

### Summary of the Invention

The object of the present invention is to solve the technical problems of large risk of uncertain loss under the margin trading mode of the current financial investment product and vulnerability to huge loss.

To achieve the above object of the present invention, there is provided a financial transaction system that limits loss, comprising a server end and a client end, the server end connects to the client end via a network;
the server end comprises a plurality of servers, and the server is provided therein with a financial transaction unit;
the client end comprises a plurality of clients, the clients are suitable for performing a real-time financial transaction by means of sharing the financial transaction unit;
the financial transaction unit comprises a price limit locking module and a transaction forcing module, the price limit locking module is suitable for setting a target profit margin, a stop-loss margin and an investment amount of a financial transaction, when a price of the investment product reaches or is beyond the price P of the investment product corresponding to the prior one of the target profit margin and the stop-loss margin, and the transaction forcing module is suitable for immediately performing transaction settlement on the investment product with the price P.

Further, the server end comprises a main server, a first server, a second server, a third server, and a dealer server, wherein the main server, the first server, the second server, the third server and the dealer server constitute a top-layer server end, and the main server connects respectively to the first server, the second server and the third server; the first server, the second server and the third server connect to the dealer server, and the dealer server lies between the top-layer server end and the client end; the clients of the client end comprise a dealer client, a dealer agent client and an investor client, and the dealer server connects respectively to the dealer client, the dealer agent client and the investor client.

The financial transaction unit in the main server is a financial transaction unit I, which is converted to a financial transaction unit II after SQL data processing, and the financial transaction unit II is shared among the first server, the second server and the third server.

The financial transaction unit II in the first server, the second server and the third server is shared with the dealer server, and the financial transaction unit II in the dealer server is shared with the dealer client, the dealer agent client and the investor client.

Further, the main server, the first server, the second server and the third server are respectively provided with a standby server.

Further, the price limit locking module of the financial transaction unit II in the investor client comprises a input module, wherein the input module is used for an investor to input the target profit margin and the investment amount, and used to manually input the stop-loss margin or to automatically input a stop-loss margin equivalent to the target profit margin based on the target profit margin.

Further, the transaction forcing module of the financial transaction unit II in the investor client comprises a transaction confirming module, after the input module input the target profit margin, the stop-loss margin and the investment amount, based on the target profit margin, the stop-loss margin and the investment amount, the transaction confirming module automatically calculates and gives out a transaction amount, a target profit amount and a stop-loss amount of the investment product and displays them on the interface, and an investor chooses to confirm transaction or to cancel transaction based on the transaction amount, the target profit amount and the stop-loss amount.

Further, the financial transaction unit II of the dealer server comprises a market data collecting module of the investment product, the market data collecting module is used to obtain real-time quotes of the investment product, and to transfer the real-time quotes to the dealer client, the dealer agent client and the investor client.

Further, before an investor confirms a transaction, in case the real-time quotes varies, the transaction confirming module sends out a hint that a new quotation is required due to price variation, and based on the adjusted price recalculates automatically and gives out the transaction amount, the target profit amount and the stop-loss amount of the investment product and displays them on the interface, and an investor chooses to confirm a transaction or to cancel a transaction based on the transaction amount, the target profit amount and the stop-loss amount.

Further, the financial transaction unit II in the investor client comprises a display module, the display module is used to display real-time quotes of the investment product and at least following data on the day of the dealer agent at the corresponding and lower levels:
outstanding transactions, cancelled or rejected transactions, transaction settlement records, and investor account information.

Further, when the transaction forcing module immediately performs transaction settlement on the investment product with the price P, data of the settlement processed via the dealer server is transfered to the display module, on which the transaction settlement records and investor account information are displyed.

Further, the investor account information comprises a transaction details and a financial details, wherein the transaction details comprises details about settled transactions and unsettled transactions, the financial details comprises details about deposit amount, withdrawal amount, credit amount and balance amount.

Further, the financial transaction unit II in the investor client comprises an investment product selecting module, and the financial transaction unit I in the main server comprises a selection module for transaction charging mode;
the investment product selecting module is used to select the variety of the investment product, and the selection module for transaction charging mode is used to select commission mode for dealers.

The invention has the advantages that this invention provides a new financial transaction system, in which the settlement time is not based on the contract expiration date (Maturity), but based on if the latest quotation of the investment product by a dealer reaches or is beyond the stop-loss price or target profit price made by an investor, once the latest quotation reaches or is beyond the stop-loss price or target profit price made by an investor, settlement on the transaction is immediately performed.

In case an investor requires a dealer to perform the transaction when the latest quotation has not reached the stop-loss price or the target profit price made by the investor, there are three arrangements, any of them can be selected depending upon a agreement between the investor and the dealer:
1. The settlement must follow the stop-loss price or target profit price preset by the investor;
2. The investor may ask the dealer to perform settlement when the latest quotation of the investment product has not reached the stop-loss price or the target profit price made by the investor, provided that the investor pays service fee or commission charge to the dealer.
3. The investor is unconditionally allowed to require the dealer to perform selltement when the latest quotation has not reached the stop-loss price or the target profit price being set by the investor.

This invention dose not has a fixed contract value, contract quantity for each transaction depends on the following two options:
1. Investment amount (also as transaction amount);
2. stop-loss margin.

Then, contract quantity = investment amount / stop-loss margin.

The present invention encourages an investor to think first and act later, risk tolerance and target returns are the major consideration. Investors are required to follow following two requirements for transaction security of every investment: a) thinking before you act; b) keeping settlement loss without breaking the original budget. The present invention requires that an investor must input an investment amount and a target profit margin and a stop-loss margin before confirming every transaction. Combined with the above two requirements, both parties cooperating in the transaction agree to perform settlement only with the stop-loss margin or target profit margin, when the latest quotation of the investment product provided by a dealer reaches or is beyond the stop-loss price of the investor, settlement on the transaction is immediately performed, the transaction amount of an investor is equivalent to the amount of loss, being capable of foreseeing a potential maximum loss.

But in current futures trading, once the price of the investment product runs like price gap up or price gap down due to sharp shock in the market or holiday, the latest transaction price of the investment product has surpassed the stop-loss margin preset by an investor, the final settlement loss of the invsetor will be greater than the stop-loss margin.

Therefore, in order to make both the investor and dealer predict fairly a potential maximum loss, the spirit of the present invention is that both parties would like to abandon unexpected earnings or profits in return for security guarantees not beyond their own risk tolerance (stop-loss margin).

### Brief Description of the Figure

The present invention will be described in detail with reference to the example embodiments and accompanying drawings.
Figure 1 is a functional block diagram of the present invention;
Figure 2 is a block diagram of the financial transaction unit II of the present invention.

In which: top-layer server end 1; main server 10; first server 100; second server 101; third server102; dealer server 2; client end 3; dealer client 30; dealer agent client 31; investor client 32.

### Detailed Description of the Invention

Now making further instruction about this invention combined with figures. These figures are all simplified schematic diagram, using for explain the basic structure of this invention by means, so only showing constitute related with this invention.

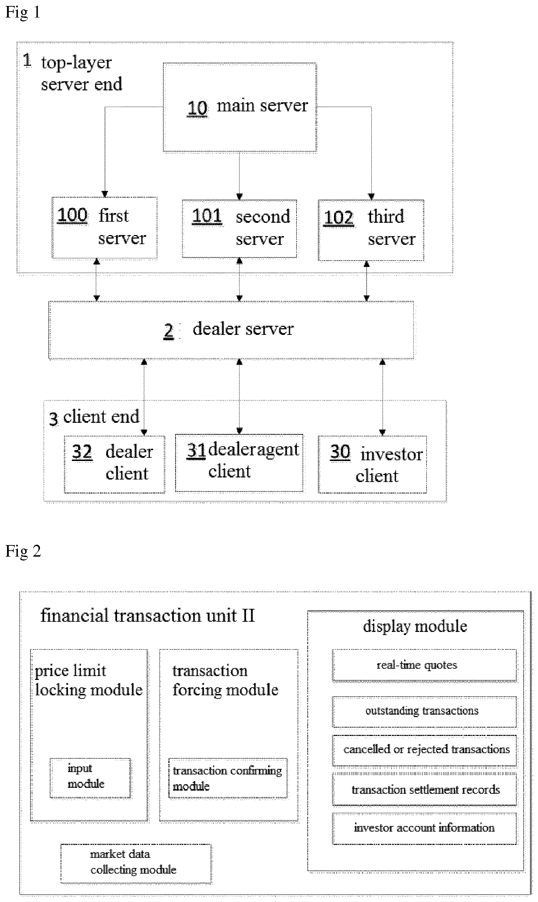

For the embodiment shown in figure 1, the financial transaction system that limits loss of this invention, comprises top-layer server end 1, dealer server 2 and client end 3, dealer server 2 is set between top-layer server end 1 and client end 3; top-layer server end 1 comprises major server 10, first server 100, second server 101 and third server 102, major server 10 is connect to first server 100, second server 101 and third server 102 respectively, first server 100, second server 101 and third server 102 are all connect to dealer server 2; client end 3 comprises dealer client 30, dealer agent client 31 and investor client 32, dealer server 2 is connect to dealer client 30, dealer agent client 31 and investor client 32 respectively.

Major server 10 being provided therein with financial transaction unit I which transformed into financial transaction unit II after SQL data processing, financial transaction unit II is stored into first server 100, second server 101 and third server 102 for sharing respectively; then financial transaction unit II stored in first server 100, second server 101 and third server 102 is stored into dealer server 2 for sharing; then financial transaction unit II stored in dealer server 2 downloaded by FTP (File Transfer Protocol), switch, firewall and internet basing IP (Internet Protocol) is stored into dealer client 30, dealer agent client 31 and investor client 32 for sharing in turn. Preferably, In order to improve the operational reliability of this financial transaction system, major server 10, first server 100, second server 101 and third server 102 are all provided therein with spare server.

As shown in figure 2, financial transaction unit II comprises a price limit locking module, a transaction forcing module, quote data collecting module, display module, price limit locking module comprises input module providing input interface for investor used for input a target profit margin, a stop-loss margin and an investment amount, wherein stop-loss margin has two input types: 1, Automatically inputted by input module basing the value of target profit margin, whose value is same with target profit margin;2, inputted by investor, whose value is same or different with target profit margin. Target profit margin and investment amount are all inputted by investor.

Take gold futures as an example, inputting value of target profit margin USD5 and investment amount USD1000 manually, then inputting stop-loss margin automatically which is same with target profit margin, or inputting value of target profit margin USD10 or USD4 or USD5, which may larger than, smaller that or same with target profit margin.

Transaction forcing module comprises confirmation transaction module which can work out transaction amount, target profit amount and stop-loss amount automatically basing on target profit margin, a stop-loss margin and an investment amount, the calculation formula is : transaction amount= investment amount/ stop-loss margin, target profit amount= transaction amount* target profit margin, stop-loss amount= transaction amount* stop-loss margin. Take gold futures as an example still, if target profit margin and stop-loss margin are all USD5, investment amount is USD1000, then transaction amount= 1000/5=200 ounce, target profit amount=200*5=USD1000, stop-loss amount=200*5= USD1000; if target profit margin is USD5, stop-loss margin is USD4, investment amount is USD1000, for calculating transaction amount basing stop-loss margin, then investment amount=1000/4=250 ounce, target profit amount=250*5=USD1250, stop-loss amount=250*4=USD1000; and so on.

Quote data collecting module is used for acquiring timely quotation of invested product from price feed provided by data source supplier (for example Ruters/Pengbo) which are sent to dealer server 2 by internet, and sending the timely quotation into dealer client 30, dealer agent client 31 and investor client 32.

Display module comprises at least timely quotation interface, un-liquidated transaction interface, cancel or refuse transaction interface, liquidated transaction record interface and investor account data interface, which are used for displaying timely quotation of invested product, at least the below data of this level and all the lower level dealer agent: un-liquidated transaction, cancel or refuse transaction, liquidated transaction record and investor account data; wherein investor account data comprises transaction details and capital details, transaction details comprises details of liquidated transaction and un-liquidated, capital details comprises details of deposit amount, extracting amount, credit Limit and balance amount.

The above target profit margin, a stop-loss margin, an investment amount, and transaction amount, target profit amount, stop-loss amount automatically calculated basing on them ,and timely price are displayed in the display module, the investor selects to conform the transaction or cancel the transaction basing on transaction amount, target profit amount, stop-loss amount. Before the investor conforms the transaction, if the timely price changes, then conform transaction module makes a tip that price changes and it is need to quote again, and automatically calculating transaction amount, target profit amount, stop-loss amount of the investment product basing on the changed price which are displayed on the display module, the investor selects to conform the transaction or cancel the transaction again basing on the new transaction amount, target profit amount, stop-loss amount.

If the changed price reaches or pass investment product price P which is corresponding to the earlier between target profit margin, a stop-loss margin, conform transaction module automatically makes transaction settlement about investment product by price p in a timely manner, which do not need the user to select. Taking the above gold futures for example, setting that the target profit margin is USD5, stop-loss margin is USD5, meaning that the target profit margin = stop-loss margin, investment amount is USD1000, basing on stop-loss margin and investment amount conform transaction module automatically calculates that transaction amount=1000/5=200 ounce, target profit amount=200*5=USD1000, stop-loss amount =200*5=USD1000, if the original buying price PO=USD1000/ounce, then just reaching the investment product price P1=USD1005/ounce corresponding to target profit margin, just reaching the investment product price P2=USD995/ounce corresponding to stop-loss margin, when the timely price Pt≧P1=USD1005/ounce or Pt≧P2=USD995/ounce acquired from market data acquisition module, then the conform transaction module automatically makes transaction settlement about investment product by price P1=USD1005/ounce or P2=USD995/ounce in a timely manner, which do not need the user to select, so acquiring the pre-setting target profit amount USD1000 when the gold rises in price, controlling the biggest stop-loss amount in stop-loss amount USD100, even the gold rises or drop suddenly and sharply in price, for example the price gap sharply, the profit or loss are all conformed, which excludes the indeterminacy of loss amount in the margin transaction mode.

Preferably, financial transaction unit II also comprises investment product selecting module, financial transaction unit I comprises transaction charge mode selecting module, investment product selecting module is used for selecting the types of the investment product, for example selecting one of noble metal such as gold, currency such as pound, commodities such as crude oil, transaction charge mode selecting module is used for selecting the commission fee model of the dealer, for example selecting the spread model or commission model.

This invention pays attention to the real intention of the investor and the risk capable of handling. So once the investor pre-sets the transaction amount and stop-loss margin, it is not need to put in margin call, then it is not need to add margin call, it will be not occur that the loss passes the investment principal, which greatly reducing the investment risk.

## Claims

1. A financial transaction system that limits loss, **characterized in that**: comprising a server end and a client end, the server end connects to the client end via a network;
the server end comprises a plurality of servers, and the server is provided therein with a financial transaction unit;
the client end comprises a plurality of clients, the clients are suitable for performing a real-time financial transaction by means of sharing the financial transaction unit;
the financial transaction unit comprises a price limit locking module and a transaction forcing module, the price limit locking module is suitable for setting a target profit margin, a stop-loss margin and an investment amount of a financial transaction, when a price of the investment product reaches or is beyond the price P of the investment product corresponding to the prior one of the target profit margin and the stop-loss margin, and the transaction forcing module is suitable for immediately performing transaction settlement on the investment product with the price P.

2. The financial transaction system of claim 1, **characterized in that**: the server end comprises a main server, a first server, a second server, a third server, and a dealer server, wherein the main server, the first server, the second server, the third server and the dealer server constitute a top-layer server end, and the main server connects respectively to the first server, the second server and the third server; the first server, the second server and the third server connect to the dealer server, and the dealer server lies between the top-layer server end and the client end; the clients of the client end comprise a dealer client, a dealer agent client and an investor client, and the dealer server connects respectively to the dealer client, the dealer agent client and the investor client.

3. The financial transaction system of claim 2, **characterized in that**: the main server, the first server, the second server and the third server are respectively provided with a standby server.

4. The financial transaction system of claim 2, **characterized in that**: the price limit locking module of the financial transaction unit II in the investor client comprises a input module, wherein the input module is used for an investor to input the target profit margin and the investment amount, and used to manually input the stop-loss margin or to automatically input a stop-loss margin equivalent to the target profit margin based on the target profit margin.

5. The financial transaction system of claim 4, **characterized in that**: the transaction forcing module of the financial transaction unit II in the investor client comprises a transaction confirming module, after the input module input the target profit margin, the stop-loss margin and the investment amount, based on the target profit margin, the stop-loss margin and the investment amount, the transaction confirming module automatically calculates and gives out a transaction amount, a target profit amount and a stop-loss amount of the investment product and displays them on the interface, and an investor chooses to confirm transaction or to cancel transaction based on the transaction amount, the target profit amount and the stop-loss amount.

6. The financial transaction system of claim 5, **characterized in that**: the financial transaction unit II of the dealer server comprises a market data collecting module of the investment product, the market data collecting module is used to obtain real-time quotes of the investment product, and to transfer the real-time quotes to the dealer client, the dealer agent client and the investor client.

7. The financial transaction system of claim 6, **characterized in that**: before an investor confirms a transaction, in case the real-time quotes varies, the transaction confirming module sends out a hint that a new quotation is required due to price variation, and based on the adjusted price recalculates automatically and gives out the transaction amount, the target profit amount and the stop-loss amount of the investment product and displays them on the interface, and an investor chooses to confirm a transaction or to cancel a transaction based on the transaction amount, the target profit amount and the stop-loss amount.

8. The financial transaction system of claim 2, **characterized in that**: the financial transaction unit II in the investor client comprises a display module, the display module is used to display real-time quotes of the investment product and at least following data on the day of the dealer agent at the corresponding and lower levels:
outstanding transactions, cancelled or rejected transactions, transaction settlement records, and investor account information.

9. The financial transaction system of claim 8, **characterized in that**: when the transaction forcing module immediately performs transaction settlement on the investment product with the price P, data of the settlement processed via the dealer server is transferred to the display module, on which the transaction settlement records and investor account information are displayed.

10. The financial transaction system of claim 8 or 9, **characterized in that**: the investor account information comprises a transaction details and a financial details, wherein the transaction details comprises details about settled transactions and unsettled transactions, the financial details comprises details about deposit amount, withdrawal amount, credit amount and balance amount.

11. The financial transaction system of claim 2, **characterized in that**: the financial transaction unit II in the investor client comprises an investment product selecting module, and the financial transaction unit I in the main server comprises a selection module for transaction charging mode;
the investment product selecting module is used to select the variety of the investment product, and the selection module for transaction charging mode is used to select commission mode for dealers.
